# EUROPEAN PATENT APPLICATION

(11) **EP 2 110 833 A1**
(43) Date of publication of application: **21.10.2009**
(21) Application number: 08718420.6
(22) Date of filing: 16.01.2008
(51) Int. Cl.: H01H 13/705

(54) **PUSH-BUTTON SWITCH ASSEMBLY ARRANGEMENT**

(30) Priority: 17.01.2007 ES 200700086 U
(71) Applicant: Industrias Lorenzo, SA, 08849 Sant Climent De Llobregat (ES)
(72) Inventor: LORENZO RIERA, Miguel Angel, E-08849 Sant Climent de LLobregat (ES); VERDU MARTINEZ, Juan José, E-08849 Sant Climent de Llobregat Barcelona (ES)
(74) Representative: Gislon, Gabriele
(86) International application number: PCT/ES2008/000019
(87) International publication number: WO 2008/087239

(57) **Abstract**

The invention relates to a push-button switch assembly arrangement, comprising a plurality of push-button switch assemblies with a base body (6), each of them having an OLED display (D1) connected via first wiring (10) to a corresponding local control unit adapted for controlling the selective turning on/off of said OLED, said local control units being each connected via wiring (11) to a single common two-way communication bus which links them to an electronic central control system. The invention is applicable to automatic dispensing or amusement machines with information via the OLED display relating to the function of the machine.

## Description

### Field of the Art

The present invention generally relates to a push-button switch assembly arrangement, of the type having corresponding OLED displays with corresponding local control units connected to an electronic central control system, and particularly to a push-button switch assembly arrangement the local control units of which are connected to said electronic central control system via a single common two-way communication bus.

The invention has a particular application in automatic dispensing machines (vending-type machines) in which the OLED display of each switch can serve to display use or advertising information or in amusement machines with the functionality of indicating information relating to the game, prizes, variants, etc.

### Prior State of the Art

Patent application EP-A-1589551 discloses a push-button switch assembly with an OLED display supported in a housing thereof in a position to be viewable by a user, and a controller circuit electrically coupled to the switch assembly so as to control the display in response to the operation of the switch of the push-button switch assembly, and other factors, such as the passage of a certain period of time. Said controller circuit comprises a power supply, a display controller device, or driver, and a microcontroller responsible for performing functions of input/output display driver management operations, as well as display update functions, and includes memory (e.g. flash or RAM). The controller circuit is programmed to make the OLED display show certain visual information. Said patent application contemplates the possibility of communicating, wirelessly (through radiofrequency, sound or light) or through cable, to the controller circuit with a remote station for the purpose of being remotely reprogrammed.

Said patent application neither describes nor suggests the possibility of communicating corresponding controller circuits of a plurality of push-button switch assemblies with corresponding OLED displays with an electronic central control system, such as said remote station; problems with infrastructure, communication protocols, traffic and management of the information for one such communication with a plurality of controller circuits of OLED displays are therefore not even considered.

A document which does describe an arrangement including a plurality of push-button switch assemblies in communication with an electronic central control system (or central configuration unit), is patent application EP-A-1347363, which relates to a reconfigurable keyboard for a computer with a plurality of keys, or push-button switch assemblies, each of which is provided with an OLED display connected, via an activation microcircuit, to a corresponding local control unit for selectively controlling the activation of the various diodes of the display. All of said local control units are connected, via individual and one-way communication paths, with a central configuration unit, which is adapted for assigning to each key a corresponding alphanumerical symbol and/or image to be displayed on its corresponding display, by means of the sending of said information to each local control unit. For the purpose of reprogramming the information to be displayed on the OLED displays, the central configuration unit is communicated in a one-way manner with a computer so that the latter sends to it the new information to be displayed.

Although said document does propose an arrangement including a plurality of push-button switch assemblies, such arrangement has a series of limitations which most likely originate from the fact that the clustering of keys forms a keyboard, and which are desirable to overcome, such as the inclusion of intermediate control units (such as the mentioned central configuration unit) between the computer and the various local control units, as well as the plurality of individual communication paths between the local control units and the central configuration unit, one path per local control unit, which in said keyboard are carried out in the form of a plurality of conductor tracks.

For the case in which said push-button switch assemblies are not clustered together in such a small place such as a keyboard, but rather they form part, for example, of various panels of certain machines, the large number of communication paths used in the proposal made in said patent application EP-A-1347363 would bring on a large number of cables with considerable length if they are located far from the computer, or a large number of wireless communication paths, as the case may be, which could cause/receive interferences, and in both cases requiring for the implementation thereof a complex and expensive infrastructure both with respect to the management thereof and the material to be used.

### Summary of the Invention

It is necessary to offer an alternative to the state of the art by means of providing a push-button switch assembly arrangement with a simpler communications infrastructure than those described in the preceding section, requirement a much lower number of communication paths than those proposed in the state of the art, which in turn allows its connection to an electronic central control system, enabling a simple, effective and individualized control of each of the OLED displays of the corresponding push-button switch assemblies which have them.

For that purpose, the present invention relates to a push-button switch assembly arrangement, of the type comprising a plurality of push-button switch assemblies, each of them having at least one display formed by organic light-emitting diodes, known as OLEDs, and a corresponding local control unit adapted for controlling the selective turning on/off of said OLEDs, said local control units of said push-button switch assemblies being connected to an electronic central control system adapted for controlling said local control units.

Unlike the conventional proposals, the push-button switch assembly arrangement proposed by the invention is **characterized in that** the electronic central control system is connected to the local control units via a single common two-way communication bus.

In other words, by means of the present invention the plurality of individual communication paths used in the state of the art is eliminated, only one communication path being required for communicating all the local control units with the electronic central control system, said single communication path consisting of a bus formed by a series of cables (the number will depend on the interface or protocol to be used), both for power supply and for data, along which cables the local control units are connected at different points.

For the purpose of being able to identify and address each of the local control units, each of the latter comprises a memory with data relating to a corresponding local address, the electronic central control system being adapted for identifying each of said local addresses, and thus being able to send to each of them in an individualized manner (or to a sub-group thereof) information to be shown on its display.

For one embodiment, said electronic central control system and said local control units are adapted for communicating with one another by means of using one and the same serial communication protocol.

For another embodiment, the electronic central control system is adapted for using a serial communication protocol of a first type (such as USB) and the local control units are adapted for using a serial communication protocol of a second type (such as RS-232), in which case the electronic central control system is connected to the common bus via an intermediate protocol converter device adapted for converting the communications transmitted with said protocol of a first type into communications with said protocol of a second type, and vice versa.

With respect to the electronic central control system, it can be, depending on the embodiment, from a CPU, such as a personal computer, or PC, to another class of microprocessing system capable of suitably communicating with the local control units.

The electronic central control system is preferably also connected to the output of several switches of said push-button switch assemblies, each of them being activatable when a corresponding button is pressed, the electronic central control system being adapted for identifying the activation of each of said switches and operating accordingly, for example sending certain information to the local control unit of the push-button switch assembly the switch of which has been operated, so that it displays such information on its corresponding display.

For one embodiment, the push-button switch assemblies forming the proposed arrangement are clustered in one or more groups.

For a preferred embodiment, the push-button switch assemblies are coupled to one or several panels of one or several corresponding machines, for example amusement machines, for the purpose of performing different functions relating to said machines when they are pressed by a user.

### Brief Description of the Drawings

The previous and other advantages and features will be more fully understood from the following detailed description of several embodiments in relation to the attached drawings, which must be interpreted in an illustrative and non-limiting manner, in which:
Figure 1 is a schematic depiction of the arrangement proposed by the invention for one embodiment,
Figure 2 is a schematic depiction of the arrangement proposed by the invention for another embodiment,
Figure 3 is a plan view of a printed circuit board which incorporates circuitry including a local control unit for one embodiment of the invention, and
Figure 4 is a perspective view of a push-button switch assembly of the arrangement proposed by the invention for one embodiment.

### Detailed Description of several Embodiments

As can be seen in the attached drawings, the present invention relates to an arrangement comprising a plurality of push-button switch assemblies P₁, P₂, P₃...Pₙ, each of them having a display D₁, D₂, D₃...Dₙ formed by organic light-emitting diodes, or OLEDs, and a corresponding local control unit 2₁, 2₂, 2₃...2ₙ adapted for controlling the selective turning on/off of said OLEDs.

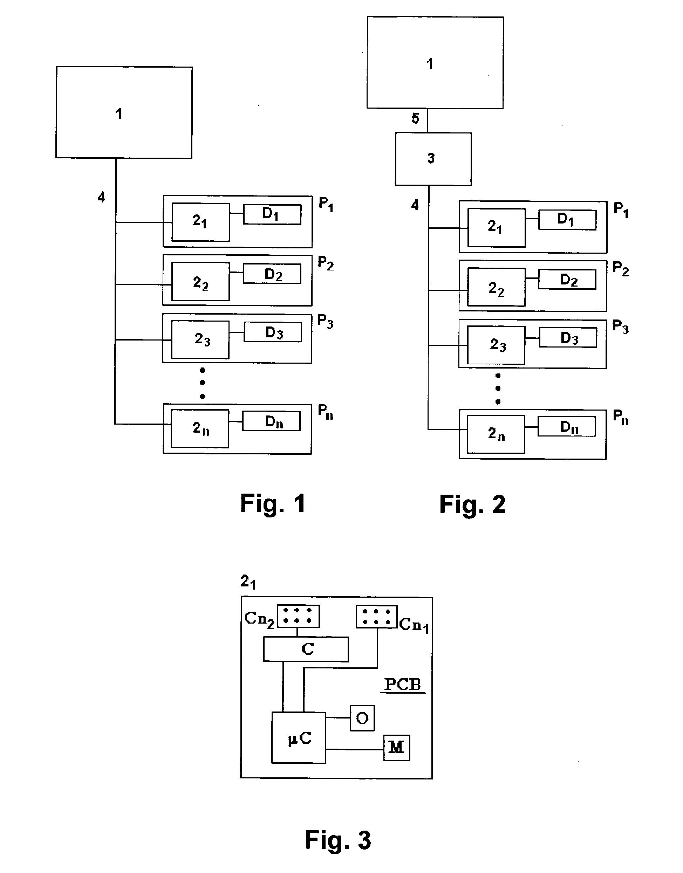

As is seen in Figures 1 and 2, which are representative of two corresponding embodiments, the mentioned local control units 2₁, 2₂, 2₃...2ₙ of said push-buttons are connected to an electronic central control system 1 (such as a central processing unit PC) via a single common two-way communication bus 4, along different points of said bus 4.

For the embodiment illustrated in Figure 1, both the electronic central control system 1 and said local control units 2₁, 2₂, 2₃...2ₙ are adapted for communicating with one another by means of using one and the same serial communication protocol, therefore the common bus 4 to which each of the units 2₁, 2₂, 2₃...2ₙ is connected is directly connected to the electronic central control system 1.

However, for the embodiment illustrated in Figure 2, the electronic central control system 1 is adapted for using a serial communication protocol of a first type and the local control units 2₁, 2₂, 2₃...2ₙ are adapted for using a serial communication protocol of a second type, therefore the arrangement also comprises a protocol converter device 3 intercalated between the electronic central control system 1 and the common bus 4, and adapted for converting the communications transmitted with said protocol of a first type into communications with said protocol of a second type, and vice versa.

Said Figure 2 shows how the electronic central system 1 is connected to said protocol converter device 3 via a communication path 5, the information circulating via said path 5 in a two-way manner with said protocol of a first type and via the common bus 4 with said protocol of a second type.

For one embodiment, the communication protocol of a first type is a universal serial bus, or USB, protocol and the communication protocol of a second type is RS-232, RS-485 or RS-422, or any other protocol which a person with average skills in the art would consider as similar.

With respect to the local control units 2₁, 2₂, 2₃...2ₙ, each of them comprises associated thereto one or more memories M with data relating to a corresponding local address, by means of the reading of which the electronic central control system 1 is adapted for identifying each of said local addresses.

Each of said local control units 2₁, 2₂, 2₃...2ₙ comprises a microcontroller µC which, for one embodiment, not shown, comprises one of said memories inside it, and for the preferred embodiment illustrated in Figure 3, it is externally connected to the memory M, since the latter is external to the microcontroller µC.

Said Figure 3 shows another series of elements included in the local control unit 2₁ illustrated, which is formed by a printed circuit board PCB, with circuitry (schematically depicted) formed by the mentioned microcontroller µC, in connection with an oscillator O, with the memory M, with a first connector Cn₁ to be connected to the electronic central control system 1, as well as a display controller device or driver C connected to a second connector Cn₂ to be connected to a corresponding OLED display D₁.

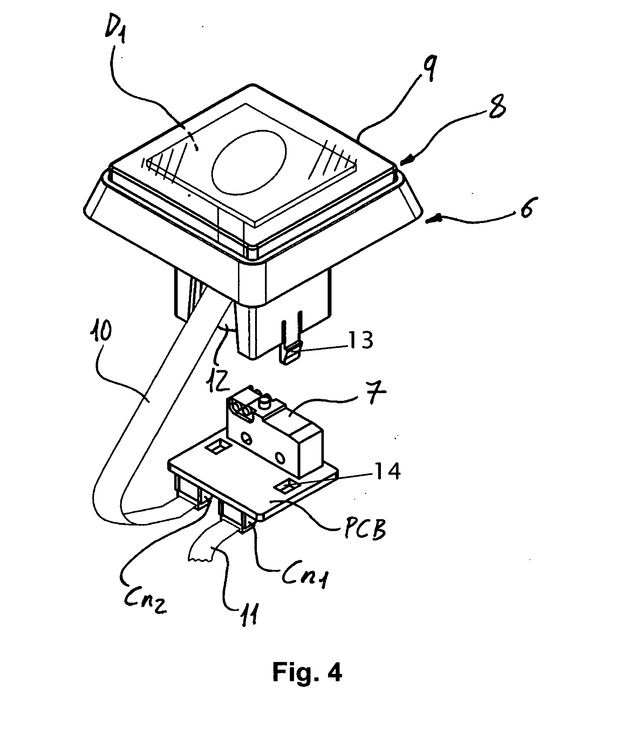

Figure 4 shows one of the push-button switch assemblies P₁, P₂, P₃...Pₙ for one embodiment for which it comprises:
a base body 6 adapted for being fixed to a panel (not shown);
an actuator assembly 8, with a translucent or transparent cover 9, mounted in a linearly movable manner in said base body 6 and adapted for being pushed to operate a switch 7 with an end portion 12 of said actuator assembly 8;
a support board PCB, such as the one shown in Figure 3, having a circuit which includes said local control unit 2₁, 2₂, 2₃...2ₙ, said switch 7, and first and second connectors Cn₁, Cn₂, said support board PCB being adapted for being positioned with respect to said base body 6 and fixed thereto, for example via the tabs 13 and notches 14 shown in Figure 4;
an OLED display D₁, D₂, D₃ ...Dₙ in connection with said local control unit 2₁, 2₂, 2₃...2ₙ via a first wiring 10 connected to said second connector Cn₂, and arranged under said cover 9 of said actuator assembly 8.

The mentioned first connector Cn₁ is adapted for connecting the corresponding local control unit 2₁, 2₂, 2₃...2ₙ to the common two-way communications bus 4 by means of a second wiring 11, which has been shown in Figure 4 as a flat cable tubing, in the same way as the first wiring 10.

This plurality of push-button switch assemblies locally controlled and linked by a single common two-way communications bus to an electronic central control system is particularly applicable to dispensing or amusement machines in which instructions can be sent to the user in relation to the operation of the machine or of the game via the display of the push-button.

A person skilled in the art could introduce changes and modifications in the described embodiments without departing from the scope of the invention as it is defined in the attached claims.

## Claims

1. A push-button switch assembly arrangement, of the type comprising a plurality of push-button switch assemblies (P₁, P₂, P₃...Pₙ), each of them with at least one display (D₁, D₂, D₃...Dₙ) formed by organic light-emitting diodes, or OLEDs, and a corresponding local control unit (2₁, 2₂, 2₃...2ₙ) adapted for controlling the selective turning on/off of said OLEDs, said local control units (2₁, 2₂, 2₃...2ₙ) of said push-button switch assemblies (P₁, P₂, P₃...Pₙ) being connected to an electronic central control system (1) adapted for controlling said local control units (2₁, 2₂, 2₃...2ₙ), said push-button switch assembly arrangement being **characterized in that** said electronic central control system (1) is connected to said local control units (2₁, 2₂, 2₃...2ₙ) via a single common two-way communication bus (4).

2. The arrangement according to claim 1, **characterized in that** each of said local control units (2₁, 2₂, 2₃...2ₙ) comprises associated thereto at least one memory (M) with at least data relating to a corresponding local address, said electronic central control system (1) being adapted for identifying each of said local addresses.

3. The arrangement according to claim 1 or 2, **characterized in that** each of said local control units (2₁, 2₂, 2₃...2ₙ) comprises at least one microcontroller (µC).

4. The arrangement according to claim 3 when it depends on claim 2, **characterized in that** each of said microcontrollers (µC) comprises at least one of said memories.

5. The arrangement according to claim 3 when it depends on claim 2, **characterized in that** said memories (M) are external to said microcontrollers (µC), each of them being connected to one of said microcontrollers (µC).

6. The arrangement according to claim 1, **characterized in that** said electronic central control system (1) and said local control units (2₁, 2₂, 2₃...2ₙ) are adapted for communicating with one another by means of using one and the same serial communication protocol.

7. The arrangement according to claim 1, **characterized in that** said electronic central control system (1) is adapted for using a serial communication protocol of a first type and said local control units (2₁, 2₂, 2₃...2ₙ) are adapted for using a serial communication protocol of a second type, said electronic central control system (1) being connected to said common bus (4) via a protocol converter device (3) adapted for converting the communications transmitted with said protocol of a first type into communications with said protocol of a second type, and vice versa.

8. The arrangement according to claim 7, **characterized in that** said communication protocol of a first type is a universal serial bus, or USB, protocol.

9. The arrangement according to claim 7 or 8, **characterized in that** said communication protocol of a second type is RS-232, RS-485 or RS-422.

10. The arrangement according to any of the previous claims, **characterized in that** said electronic central control system (1) is a central processing unit, CPU.

11. The arrangement according to any of the previous claims, **characterized in that** said electronic central control system (1) is also connected to the output of switches of said push-button switch assemblies (P₁, P₂, P₃...Pₙ), each of them being activatable when a corresponding button is pressed, the electronic central control system (1) being adapted for identifying the activation of each of said switches.

12. The arrangement according to any of the previous claims, **characterized in that** said push-button switch assemblies (P₁, P₂, P₃...Pₙ) are clustered in one or more groups.

13. The arrangement according to any of claims 1 to 11, **characterized in that** each of said push-button switch assemblies (P₁, P₂, P₃...Pₙ) comprises:
a base body (6) adapted for being fixed to a panel;
an actuator assembly (8), with a translucent or transparent cover (9), mounted in a linearly movable manner in said base body (6) and adapted for being pushed to operate a switch (7);
a support board (PCB) having a circuit which includes said local control unit (2₁, 2₂, 2₃...2ₙ), said switch (7), and first and second connectors (Cn₁, Cn₂), said support board (PCB) being adapted for being positioned with respect to said base body (6) and fixed thereto;
an OLED display (D₁, D₂, D₃...Dₙ) in connection with said local control unit (2₁, 2₂, 2₃...2ₙ) via a first wiring (10) connected to said second connector (Cn₂), and arranged under said cover (9) of said actuator assembly (8),
said first connector (Cn₁) being adapted for connecting said local control unit (2₁, 2₂, 2₃...2ₙ) to said single common two-way communications bus (4) by means of a second wiring (11).
